# FASCICULE DE BREVET EUROPEEN

(11) **EP 1 080 039 B1**
(45) Date de publication et mention de la délivrance du brevet: **28.11.2001**
(21) Numéro de dépôt: 99923327.3
(22) Date de dépôt: 27.05.1999
(51) Int. Cl.: C01F 11/18, C09C 1/02, D21H 19/46, D21H 17/67

(54) **SUSPENSION DE CARBONATE DE CALCIUM ET SON PROCEDE DE FABRICATION**
CALCIUMKARBONATSUSPENSION UND VERFAHREN ZU DEREN HERSTELLUNG
CALCIUM CARBONATE SUSPENSION AND METHOD FOR MAKING SAME

(30) Priorité: 27.05.1998 BE 9800409
(43) Date de publication de la demande: 07.03.2001
(73) Titulaire: S.A. LHOIST RECHERCHE ET DEVELOPPEMENT, 1342 Ottignies-Louvain-La-Neuve (BE)
(72) Inventeur: LANGELIN, Henri, René, F-62132 Caffiers (FR); SCHARFE, Marc, L-7513 Mersch (LU)
(74) Mandataire: Claeys, Pierre
(86) Numéro de dépôt international: BE9900067
(87) Numéro de publication internationale: WO9961374

(56) Documents cités:
- EP-A- 0 281 134
- WO-A-98/16471
- DE-A- 19 605 970
- DE-C- 4 410 662
- US-A- 5 449 402
- DATABASE WPI Section Ch, Week 8838 Derwent Publications Ltd., London, GB; Class A60, AN 88-267638 XP002112160 & JP 63 195115 A (SEIKA SANGYO CO LTD), 12 août 1988 (1988-08-12)

## Description

La présente invention a pour objet une suspension aqueuse de particules de carbonate de calcium présentant un pH d'une valeur inférieure à 9, cette suspension présentant une teneur en un agent permettant l'obtention d'un potentiel Zéta positif des particules de carbonate de calcium.

Dans l'industrie papetière, il est important d'utiliser des suspensions de particules de carbonate de calcium assurant une bonne adhésion des particules sur les fibres de cellulose.

Dans ce but, il est connu d'utiliser des dispersions aqueuses de carbonate de calcium ajustées par voie cationique à des valeurs de potentiel Zéta recherchées (voir notamment EP-A-0 281 134). L'agent d'ajustement est un polymère cationique, dont le coût grève la fabrication de papier. Par ailleurs, même si l'application de carbonate de calcium précipité (PCC) est envisagée dans ce document antérieur, tous les exemples de réalisation décrits font usage de carbonate de calcium naturel finement broyé (GCC).

De même que dans le document ci-dessus, on a déjà décrit dans la DE-A-19605970 un procédé de préparation de papier à l'aide d'une composition contenant du carbonate de calcium naturel, broyé, en suspension aqueuse et un liant, cette composition étant elle aussi ajustée par voie cationique.

Il faut noter que les suspensions de carbonate de calcium naturel broyé présentent un pH neutre ou uniquement très légèrement basique. Ces suspensions restent donc naturellement en dessous de la valeur de pH de 9. Il n'en est pas de même des suspensions de carbonate de calcium précipité qui sont précipitées à pH 7, mais qui peuvent monter à un pH de 11 à 12. Il faut aussi noter que, en tant que charge pour la fabrication de papier, le PCC offre, par rapport au GCC, le grand avantage d'apporter une meilleure solution de compromis vis-à-vis de l'opacité du papier, sa blancheur et sa caractéristique appelée "main", c'est-à-dire la résistance mécanique pour une finesse donnée.

Dans un document non publié à la date de priorité de la présente demande de brevet, la WO98/29601 on décrit une suspension de carbonate de calcium dont le pH peut être stabilisé à une valeur inférieure à 7 à l'aide d'un très grand nombre d'agents stabilisants, dont des acides faibles et des sels de calcium solubles dans l'eau.

La présente invention a pour objet une suspension simple à fabriquer et ne nécessitant pas l'utilisation d'additifs coûteux. Elle a également pour objet de permettre à la fois de stabiliser le pH d'une suspension de carbonate de calcium qui vient d'être précipitée et d'atteindre une valeur de potentiel Zéta positif, par une sélection judicieuse d'un agent permettant l'obtention d'un tel potentiel.

On résout ces problèmes, suivant l'invention, par une suspension aqueuse de particules de carbonate de calcium telle que décrite au début, cette suspension étant une suspension de particules de carbonate de calcium précipité, dont le pH est stabilisé à ladite valeur inférieure à 9, l'agent permettant l'obtention d'un potentiel Zéta positif étant une matière faisant passer en solution des ions Ca⁺⁺. Une telle suspension présente un pouvoir d'adhésion des particules sur les fibres de cellulose qui est particulièrement remarquable. Par ailleurs, l'ajout de tels agents à la suspension favorise l'obtention de particules de carbonate de calcium précipité présentant un potentiel Zéta positif élevé, avec maintien d'un pH stable, et cela sans décomposition des particules.

Suivant une forme de réalisation de l'invention l'agent permettant l'obtention d'un potentiel Zéta positif est un acide monocarboxylique dilué de formule A-COOH où A est choisi parmi le groupe comprenant de l'hydrogène et des radicaux alkyle avec un nombre d'atomes de carbone allant de 1 à 8, avantageusement de 1 à 3, ou en un mélange de tels acides. Un tel agent est favorablement utilisé dans la suspension, lorsque celle-ci présente encore une teneur résiduelle de Ca(OH)₂. Par réaction avec cette base, l'acide faible libère des ions Ca⁺⁺ qui s'accrochent sur la surface négative des particules de CaCO₃. De préférence, on utilise de l'acide acétique, de l'acide formique ou de l'acide propionique comme acide monocarboxylique, ou leur mélange ou encore un mélange d'un de ces acides avec au moins un autre acide monocarboxylique de formule A-COOH tels que définis ci-avant.

Suivant une autre forme de réalisation de l'invention, l'agent permettant l'obtention d'un potentiel Zéta positif est un sel de calcium soluble dans l'eau ou un mélange de tels sels, qui dans la suspension aqueuse fait passer en solution des ions Ca⁺⁺. Cet agent est particulièrement avantageux quand la suspension de carbonate de calcium précipité ne contient plus de Ca(OH)₂. Comme sels de calcium solubles dans l'eau on peut prévoir par exemple des halogénures, en particulier du chlorure, ainsi que du nitrate ou des monocarboxylates solubles, par exemple de l'acétate.

Suivant une forme de réalisation de l'invention, les particules de la suspension présentent un potentiel Zéta positif supérieur à 10 mV, notamment compris entre 10 et 20 mV, avantageusement d'environ 15 mV. De préférence le pH de la suspension est stabilisé entre 7 et 9, et tout à fait préférentiellement entre 7,5 et 8,5.

Les particules de carbonate de calcium répondent avantageusement à la structure de la vatérite ou de l'aragonite.

Les particules présentant avantageusement un diamètre moyen en poids inférieur à 5 µm.

La teneur en particules de la suspension est avantageusement supérieure à 200 g/l, par exemple de 250 g/l à 500 g/l.

De façon avantageuse, la suspension suivant l'invention présente une teneur en sel de calcium d'acide monocarboxylique ou d'un mélange d'acides monocarboxyliques comprise entre 100 mg/l et 20 g/l, en particulier entre 200 mg/l et 4 g/l.

Selon une forme de réalisation particulière, les particules de carbonate de calcium présentent une teneur en Mn exprimée en MnO comprise entre 50 ppm et 500 ppm, avantageusement entre 70 et 250 ppm, et de préférence entre 100 et 200 ppm, une teneur en Fe exprimée en Fe₂O₃ inférieure à 2000 ppm, avantageusement inférieure à 1000 ppm, un indice de blancheur mesuré à 457 nm supérieur ou égal à 95, mais inférieur à 99, et un indice de jaune inférieur ou égal à 1,5, mais supérieur à 0,5.

D'autres formes de réalisation de la suspension suivant l'invention sont indiquées dans les revendications 1 à 9.

L'invention a également pour objet un procédé de préparation d'une suspension suivant l'invention. Ce procédé comprend
- une formation d'une suspension de particules de carbonate de calcium dans un milieu aqueux, et
- une addition à la suspension d'un agent permettant l'obtention d'un potentiel Zéta positif des particules de carbonate de calcium, le pH de la suspension ayant une valeur inférieure à 9,
ce procédé étant caractérisé en ce que l'étape de formation d'une suspension comprend un traitement d'un milieu aqueux de pH basique et contenant du Ca(OH)₂ par injection de CO₂ gazeux pour former une suspension de carbonate de calcium précipité et en ce que l'agent permettant l'obtention d'un potentiel Zéta positif fait passer en solution des ions Ca⁺⁺ en une quantité suffisante pour stabiliser le pH de la suspension de carbonate de calcium précipité à ladite valeur de pH inférieure à 9.

De façon avantageuse, on stabilise le pH de la suspension à une valeur comprise entre 7 et 9.

Selon une forme de réalisation avantageuse, pour stabiliser le pH de la suspension à une valeur comprise entre 7,5 et 8,5 et pour accroître le potentiel Zéta des particules de carbonate de calcium à une valeur comprise entre 10 et 20 mV, on utilise une solution aqueuse d'un acide monocarboxylique de formule A - COOH ou d'un mélange de tels acides, cette solution aqueuse présentant une concentration molaire en acide monocarboxylique inférieure à une mole par litre, de préférence comprise entre 0,05 et 0,3 mole par litre, en particulier de 0,1 à 0,2 mole par litre.

Selon une forme de réalisation particulière, le traitement du milieu aqueux est effectué en présence d'un additif choisi parmi le groupe constitué de l'hydrazine, de l'hydroxylamine, des sels solubles d'hydroxylamine, des sels solubles de dithionite, et leurs mélanges, ledit milieu aqueux contenant de préférence une quantité dudit additif correspondant à 0,035 à 5% en poids de Ca(OH)₂.

Avantageusement, on effectue ledit traitement sous une pression supérieure à la pression atmosphérique, de préférence sous une pression comprise entre 1,2.10⁵ Pa et 10.10⁵ Pa, et de préférence à une température supérieure à 5°C, avantageusement comprise entre 10 et 100°C, notamment entre 20 et 95°C, plus particulièrement entre 30 et 60°C.

Selon un détail d'une forme de réalisation, on soumet la suspension de particules de carbonate formées à un traitement pour décomposer l'additif, avant de traiter la suspension au moyen de l'agent permettant d'obtenir un potentiel Zéta positif, par exemple de la solution diluée d'acide monocarboxylique.

L'invention a encore pour objet un procédé de fabrication de papier ou de carton à partir d'une suspension de fibres cellulosiques, dans lequel cette suspension cellulosique est préparée à partir d'une suspension de particules suivant l'invention, procédé dans lequel on applique cette suspension cellulosique sur un support poreux, et dans lequel on récupère des eaux d'égouttage provenant du support poreux. De façon avantageuse, on utilise au moins partiellement les eaux d'égouttage pour la préparation d'une suspension de particules suivant l'invention, cette suspension étant alors réutilisée pour la préparation d'une suspension de fibres cellulosiques. Ces eaux d'égouttage servent donc partiellement à l'extinction de chaux vive, extinction avantageusement réalisée en présence d'un additif choisi parmi le groupe constitué de l'hydrazine, l'hydroxylamine, les sels solubles d'hydroxylamine, les sels solubles de dithionite, et leurs mélanges, pour la préparation d'un lait de chaux que l'on soumet à une carbonatation (injection de CO₂) et ensuite à un traitement par exemple à l'acide acétique dilué. Lors de l'opération du séchage de la couche ou nappe cellulosique chargée, l'acétate de calcium présent se transforme en acétone gazeux et en carbonate de calcium.

D'autres détails concernant le procédé suivant l'invention sont indiqués dans les revendications 10 à 21.

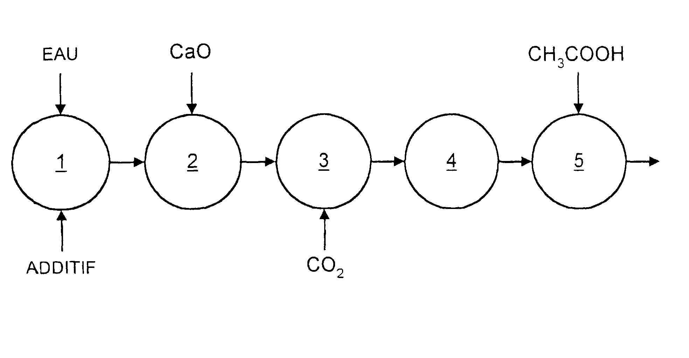

Des détails de l'invention ressortiront de la description donnée ci-après dans laquelle il est fait référence à la figure 1 qui montre schématiquement un procédé particulier de préparation d'une suspension suivant l'invention.

### EXEMPLE 1

On fait réagir de la chaux vive avec une quantité d'eau suffisante pour former un lait de chaux contenant 222 g de Ca(OH)₂ par litre.

On soumet ce lait de chaux à une carbonatation par injection de CO₂, cette carbonatation étant effectuée à 25°C et sous une pression de 3.10⁵ Pa.

Le suspension obtenue en fin de carbonatation a une teneur en particules de carbonate de calcium d'environ 300 g/l, ces particules présentant un diamètre moyen en poids d'environ 3 µm. Le pH de la suspension après carbonatation est voisin de 8,0. Toutefois ce pH n'est pas stable parce que la suspension contient encore une teneur résiduaire en Ca(OH)₂ et, au cours du temps, le pH de la suspension s'accroît pour tendre vers une valeur proche de 12. On mesure le potentiel Zéta des particules de la suspension. Le potentiel ainsi mesuré est d'environ + 5 mV.

On ajoute à la suspension, obtenue en fin de carbonatation, divers additifs et on mesure ou estime pour ces suspensions le pH, sa stabilité et le potentiel Zéta des particules de carbonate de calcium. Le tableau suivant donne les résultats de ces mesures ou constatations.

| ADDITIF | % en poids par rapport au poids de carbonate de calcium | Potentiel Zéta en mV | pH/Stabilité |
|---|---|---|---|
| Pas d'additif | | + 5 | 8 à 12 non stabilisé |
| Acide citrique | 0,4 | - 15 | 8 stable |
| CaCl₂ | 1 | + 15 | 8 à 12 non stabilisé |
| CaCl₂ | 2 | + 15 | 8 à 12 non stabilisé |
| Ca(CH₃COO)₂ | 1 | + 15 | 8 à 12 non stabilisé |
| Ca(CH₃COO)₂ | 2 | + 15 | 8 à 12 non stabilisé |
| Acide acétique | 1 | + 15 | environ 7,5 stable |
| Acide acétique | 2 | + 15 | environ 7,5 stable |

Ce tableau montre qu'en choisissant un additif particulier, il est possible de stabiliser le pH de la suspension à environ 7,5 et d'obtenir un potentiel Zéta pour les particules de carbonate de calcium d'environ 15 mV. Dans cet exemple, l'acide critique et l'acide acétique ont été ajoutés à la suspension sous forme d'une solution diluée contenant 0,1 mole d'acide par litre.

### EXEMPLE 2

On fait réagir de la chaux vive avec une quantité d'eau suffisante pour former un lait de chaux contenant 222 g de Ca(OH)₂ par litre.

On soumet ce lait de chaux à une carbonatation par injection de CO₂, cette carbonatation étant effectuée à 10°C et sous une pression de 3.10⁵ Pa.

La suspension obtenue en fin de carbonation a une teneur en particules de carbonate de calcium d'environ 150 g/l, les particules présentant un diamètre moyen en poids d'environ 1 µm. Le pH de la suspension après carbonatation est voisin de 8,0. Ce pH est stable car il ne subsiste plus de Ca(OH)₂ résiduaire dans la suspension. On mesure le potentiel Zéta des particules de la suspension. Le potentiel est d'environ 0 mV.

On ajoute à la suspension obtenue en fin de carbonatation du CaCl₂. Le pH diminue à environ 7, éventuellement moins, et le potentiel Zéta augmente à une valeur de +15 mV.

### EXEMPLE 3

Pour la préparation de la suspension, on utilise le procédé illustré schématiquement à la figure 1. Dans ce procédé, on prépare en 1 un milieu aqueux contenant par exemple de 0,05 à 2,5% d'additif choisi parmi le groupe constitué de l'hydrazine, l'hydroxylamine, les sels solubles d'hydroxylamine, les sels solubles de dithionite, et leurs mélanges. En 2, on ajoute au milieu aqueux des particules de CaO de manière à former une suspension ou lait de Ca(OH)₂. En 3, on injecte dans la suspension du CO₂ par exemple à un débit de 10 à 200g de CO₂/heure/litre. Avantageusement on règle la température de la suspension en 3 par exemple entre 20 et 60°C, de préférence à environ 40°C. L'injection de CO₂ se fait avantageusement dans une cuve maintenue à une pression réelle de 1,2.10⁵ à 10.10⁵ Pa, de préférence de 1,5 à 3.10⁵ Pa. En 4 on soumet la suspension des particules de CaCO₃ formées à un traitement pour décomposer toutes traces de l'additif introduit en 1, par exemple un traitement à l'eau chaude pour éliminer de l'hydroxylamine et/ou un traitement au moyen d'une solution aqueuse contenant de l'hypochlorite de sodium, de manière à éliminer toutes traces d'hydrazine. En 5, on ajoute à la suspension une solution aqueuse d'acide acétique (0,1 mole/litre) pour stabiliser le pH à 7,5 - 8,5 et pour assurer un potentiel Zéta des particules d'environ + 15 mV.

### EXEMPLE 4

On fait réagir de la chaux vive avec une quantité d'eau suffisante pour former un lait de chaux contenant 222 g de Ca(OH)₂ par litre.

On soumet ce lait de chaux à une carbonatation par injection de CO₂, cette carbonatation étant effectuée à 25°C et sous une pression de 3.10⁵ Pa.

La suspension obtenue en fin de carbonatation a une teneur en particules de carbonate de calcium d'environ 300 g/l, ces particules présentant un diamètre moyen en poids d'environ 3 µm. Après carbonatation, on ajoute de l'acide formique dilué (0,1 mole/litre) pour obtenir un potentiel Zéta positif tout en stabilisant le pH à environ 8,0.

### EXEMPLE 5

On fait réagir de la chaux vive avec une quantité d'eau suffisante pour former un lait de chaux contenant 222 g de Ca(OH)₂ par litre.

On soumet ce lait de chaux à une carbonatation par injection de CO₂, cette carbonatation étant effectuée à 25°C et sous une pression de 3.10⁵ Pa.

La suspension obtenue en fin de carbonatation a une teneur en particules de carbonate de calcium d'environ 300 g/l, ces particules présentant un diamètre moyen en poids d'environ 3 µm. Après carbonatation, on ajoute de l'acide propionique pour obtenir un potentiel Zéta positif tout en stabilisant le pH à environ 8,0.

Des exemples de suspensions des particules préparées selon le procédé décrit ci-avant sont donnés ci-après :

### SUSPENSIONS 1

On prépare des suspensions à partir d'une chaux vive contenant 510 ppm de Fe exprimé sous forme de Fe₂O₃ et 125 ppm de Mn exprimé sous forme de MnO.

Le tableau suivant donne les caractéristiques des carbonates ainsi obtenus (R457 : indice de blancheur, I.J. : indice de jaune, d₅₀(µm) : diamètre moyen en poids, pZ : potentiel Zéta en mV) et le pH stabilisé de la suspension après traitement à l'acide acétique dilué.

| | ADDITIFS UTILISES LORS DE L'EXTINCTION DE LA CHAUX VIVE | | | | | |
|---|---|---|---|---|---|---|
| | Pas d'additif | THB | HZ | DT | CHA | SHA |
| R457 | 93,1 | 94,3 | 95,2 | 95,4 | 95,4 | 95,5 |
| I.J. | 2,6 | 1,8 | 1,5 | 1,3 | 1,5 | 1,5 |
| d₅₀(µm) | 2,5 | 2,0 | 2,2 | 2,2 | 2,2 | 2,0 |
| pZ(mV) | +15 | +15 | +15 | +15 | +15 | +15 |
| pH | 8 | 8 | 8 | 8 | 8 | 8 |

Ce tableau montre qu'en utilisant les additifs selon l'invention (HZ : hydrate d'hydrazine N₂H₄.H₂O; DT : dithionite de sodium Na₂S₂O₄; CHA : chlorhydrate d'hydroxylamine NH₂OH.HCl; SHA : sulfate d'hydroxylamine (NH₂OH)₂.H₂SO₄), il a été possible par rapport aux particules de référence (sans additif) d'accroître la blancheur des particules d'environ 2 points, tout en réduisant l'indice de jaune de celles-ci d'au moins un point. En utilisant d'autres additifs tels que le tétrahydroborure de sodium (THB), il n'a pas été possible d'obtenir un tel accroissement de blancheur, combiné avec un tel abaissement de jaune.

L'indice de blancheur mesuré à 457 nm et l'indice de jaune ont été mesurés sur un appareil Elrepho 2000 de DATACOLOR. Le diamètre moyen en poids (d₅₀) est exprimé en µm.

### SUSPENSIONS 2

Pour la préparation de ces suspensions, on utilise des chaux vives présentant des teneurs en Fe et en Mn (exprimées en Fe₂O₃ et MnO) différentes, et on utilise de l'hydrazine comme additif à raison de 0,2% en poids de chaux vive.

Le tableau suivant donne l'indice de blancheur des particules de carbonate de calcium de la suspension préparées sans hydrazine (R457 référence) et avec hydrazine (R457 hydrazine).

| Chaux n° | Fe₂o₃(ppm) | MnO (ppm) | R457 référence | R457 hydrazine |
|---|---|---|---|---|
| 1 | 390 | 115 | 94,3 | 96,6 |
| 2 | 900 | 109 | 94,2 | 95,8 |
| 3 | 330 | 109 | 94,8 | 97,4 |
| 4 | 500 | 125 | 93,1 | 95,1 |
| 5 | 910 | 175 | 92,8 | 95,8 |

### SUSPENSIONS 3

Pour la préparation de ces suspensions on utilise 0,1% d'hydrazine, 0,2% de dithionite de sodium et un mélange de 0,1% d'hydrazine et de 0,1% de dithionite de sodium en tant qu'additif dans l'étape d'extinction.

Le tableau suivant donne, pour les suspensions préparées, l'indice de blancheur des particules de carbonate de calcium préparées sans additif (R457 référence), avec hydrazine (R457 HZ), avec dithionite de sodium (R457 DT) et avec le mélange (R457 HZ+DT), ainsi que la teneur en fer et en Mn de la chaux vive utilisée.

| Chaux n° | Fe₂O₃ ppm | MnO ppm | R457 réf | R457 HZ | R457 DT | R457 HZ+DT |
|---|---|---|---|---|---|---|
| 1 | 910 | 175 | 92,8 | 95,9 | 95,8 | 95,9 |
| 2 | 740 | 90 | 94,4 | 95,8 | 95,7 | 95,8 |
| 3 | 500 | 125 | 93,1 | 95,2 | 95,5 | 95,4 |

### SUSPENSIONS 4

Pour la préparation de ces suspensions, on utilise une chaux vive contenant 910 ppm de fer exprimé sous forme de Fe₂O₃ et 175 ppm de Mn exprimé sous forme de MnO. Les additifs utilisés lors de l'étape d'extinction de la chaux vive sont l'hydrazine (HZ) à raison de 0,1 et 0,2 % du poids de chaux vive, le chlorhydrate d'hydroxylamine (CHA) à raison de 0,1 et 0,2 % du poids de chaux vive, le sulfate d'hydroxylamine (SHA) à raison 0,2 % en poids de chaux vive, et des mélanges de ces additifs.

Le tableau suivant donne, pour les suspensions préparées, l'indice de blancheur et l'indice de jaune des particules de carbonate de calcium de diamètre moyen compris entre 2 et 2,5 µm.

| Additif | réf. | HZ | | CHA | | SHA | HZ + CHA | | CHA + SHA | |
|---|---|---|---|---|---|---|---|---|---|---|
| % | 0 | 0,1 | 0,2 | 0,1 | 0,2 | 0,2 | 0,1 | 0,1 | 0,1 | 0,1 |
| R457 | 92,5 | 95,3 | 95,7 | 95,7 | 95,9 | 95,6 | 95,7 | | 95,7 | |
| I.J. | 3,1 | 1,5 | 1,4 | 1,5 | 1,3 | 1,5 | 1,5 | | 1,5 | |

Les particules de carbonate de calcium des suspensions préparées selon le procédé montré à la figure 1 présentent avantageusement les caractéristiques suivantes :
* une teneur en Mn exprimée en MnO comprise entre 50 ppm et 500 ppm, de préférence comprise entre 70 et 250 ppm, plus précisément entre 100 et 200 ppm;
* une teneur en Fe exprimée en Fe₂O₃ inférieure à 2000 ppm, de préférence inférieure à 1000 ppm;
* un diamètre moyen en poids inférieur à 5 µm, de préférence inférieur à 3 µm;
* un indice de blancheur mesuré à 457 nm supérieur ou égal à 95, mais inférieur à 99, et
* un indice de jaune inférieur ou égal à 1,5, mais supérieur à 0,5.

Les suspensions suivant l'invention trouvent de nombreuses utilisations, par exemple dans la fabrication de papiers, de colles à base d'eau, de peintures à l'eau (latex), etc.

Les suspensions suivant l'invention peuvent contenir des additifs divers, tels que des particules de kaolin, de l'amidon, des fibres cellulosiques, des particules d'oxyde de titane, de la colle, du polyacrylamide, de l'alun, etc. L'utilisation des suspensions suivant l'invention permet d'améliorer la rétention des charges des papiers et des cartons, sans avoir recours à l'utilisation d'additifs coûteux. L'invention a donc également pour objet l'utilisation d'une suspension suivant l'invention dans la préparation d'une pâte à papier que l'on distribue sur un support poreux, tel qu'une toile métallique. Les eaux d'égouttage provenant alors de la toile métallique contiennent une moindre teneur en carbonate de calcium et peuvent éventuellement être recyclées dans la fabrication de la suspension suivant l'invention.

Il doit être entendu que la présente invention n'est en aucune façon limitée aux modes de réalisation indiquées ci-dessus et que bien des modifications peuvent être apportées à l'invention dans le cadre des revendications annexées.

## Revendications

1. Suspension aqueuse de particules de carbonate de calcium présentant un pH d'une valeur inférieure à 9, cette suspension présentant une teneur en un agent permettant l'obtention d'un potentiel Zéta positif des particules de carbonate de calcium, **caractérisé en ce qu'**elle est une suspension de particules de carbonate de calcium précipité, dont le pH est stabilisé à ladite valeur inférieure à 9, et **en ce que** l'agent permettant l'obtention d'un potentiel Zéta positif est une matière faisant passer en solution des ions Ca⁺⁺.

2. Suspension suivant la revendication 1, **caractérisée en ce que** l'agent permettant l'obtention d'un potentiel Zéta positif est un acide monocarboxylique dilué de formule A-COOH où A est choisi parmi le groupe comprenant de l'hydrogène et des radicaux alkyle avec un nombre d'atomes de carbone allant de 1 à 8, avantageusement de 1 à 3, ou en un mélange de tels acides qui par réaction avec des résidus de Ca(OH)₂ dans la suspension fait passer en solution des ions Ca⁺⁺.

3. Suspension suivant la revendication 1, **caractérisée en ce que** l'agent permettant l'obtention d'un potentiel Zéta positif est un sel de calcium soluble dans l'eau ou un mélange de tels sels, qui dans la suspension aqueuse fait passer en solution des ions Ca⁺⁺.

4. Suspension suivant l'une des revendications 1 à 3, **caractérisée en ce que** lesdites particules de carbonate de calcium présentent un potentiel Zéta positif supérieur à 10 mV, notamment compris entre 10 et 20 mV, avantageusement d'environ 15 mV.

5. Suspension suivant l'une des revendications 1 à 4, **caractérisée en ce qu'**elle présente un pH stabilisé entre 7 et 9, de préférence entre 7,5 et 8,5.

6. Suspension suivant la revendication 2, **caractérisée en ce qu'**elle présente une teneur en ledit sel de calcium d'un acide monocarboxylique ou d'un mélange d'acides monocarboxyliques qui est comprise entre 100 mg/l et 20 g/l.

7. Suspension suivant la revendication 6, **caractérisée en ce qu'**elle présente une teneur en ledit sel de calcium d'acide monocarboxylique ou d'un mélange d'acides monocarboxyliques comprise entre 200 mg/l et 4 g/l.

8. Suspension suivant l'une des revendications 1 à 7, **caractérisée en ce que** les particules de carbonate de calcium présentent une teneur en Mn exprimée en MnO comprise entre 50 ppm et 500 ppm, avantageusement entre 70 et 250 ppm, et de préférence entre 100 et 200 ppm, une teneur en Fe exprimée en Fe₂O₃ inférieure à 2000 ppm, avantageusement inférieure à 1000 ppm, un indice de blancheur mesuré à 457 nm supérieur ou égal à 95, mais inférieur à 99, et un indice de jaune inférieur ou égal à 1,5, mais supérieur à 0,5.

9. Suspension suivant l'une quelconque des revendications 1 à 8, **caractérisé en ce que** les particules de celle-ci présentent un diamètre moyen en poids inférieure à 5 µm.

10. Procédé de préparation d'une suspension suivant l'une des revendications 1 à 9, comprenant
- une formation d'une suspension de particules de carbonate de calcium dans un milieu aqueux, et
- une addition à la suspension d'un agent permettant l'obtention d'un potentiel Zéta positif des particules de carbonate de calcium, le pH de la suspension ayant une valeur inférieure à 9,
ce procédé étant **caractérisé en ce que** l'étape de formation d'une suspension comprend un traitement d'un milieu aqueux de pH basique et contenant du Ca(OH)₂ par injection de CO₂ gazeux pour former une suspension de carbonate de calcium précipité et **en ce que** l'agent permettant l'obtention d'un potentiel Zéta positif fait passer en solution des ions Ca⁺⁺ en une quantité suffisante pour stabiliser le pH de la suspension de carbonate de calcium précipité à ladite valeur de pH inférieure à 9.

11. Procédé suivant la revendication 10, **caractérisé en ce que** la suspension de carbonate de calcium précipité formée contient encore des résidus de Ca(OH)₂ et **en ce que** l'agent permettant l'obtention d'un potentiel Zéta positif est un acide monocarboxylique dilué de formule A-COOH où A est choisi parmi le groupe comprenant de l'hydrogène et des radicaux alkyle avec un nombre d'atomes de carbone allant de 1 à 8, avantageusement de 1 à 3, ou en un mélange de tels acides, qui par réaction avec les résidus de Ca(OH)₂ fait passer en solution des ions Ca⁺⁺.

12. Procédé suivant la revendication 10, **caractérisé en ce que** la suspension de carbonate de calcium précipité formée ne contient pas de résidus de Ca(OH)₂ et **en ce que** l'agent permettant l'obtention d'un potentiel Zéta positif est un sel de calcium soluble dans l'eau ou un mélange de tels sels.

13. Procédé suivant l'une des revendications 10 à 12, **caractérisé en ce que** le potentiel Zéta des particules de carbonate de calcium est obtenu à une valeur comprise entre 10 et 20 mV, avantageusement d'environ 15 mV.

14. Procédé suivant l'une quelconque des revendications 11 et 13, **caractérisé en ce qu'**on utilise une solution aqueuse dudit acide monocarboxylique de formule A - COOH ou d'un mélange de tels acides, ladite solution aqueuse présentant une concentration molaire en acide monocarboxylique inférieure à une mole par litre, avantageusement comprise entre 0,05 et 0,3 mole par litre.

15. Procédé suivant l'une quelconque des revendications 10 à 14, **caractérisé en ce que** ledit traitement du milieu aqueux est effectué en présence d'un additif choisi parmi le groupe constitué de l'hydrazine, de l'hydroxylamine, des sels solubles d'hydroxylamine, des sels solubles de dithionite, et de leurs mélanges.

16. Procédé suivant la revendication 15, **caractérisé en ce que**, lors dudit traitement du milieu aqueux en présence dudit additif, ledit milieu aqueux contient une quantité dudit additif correspondant à 0,035 à 5% en poids de Ca(OH)₂.

17. Procédé suivant l'une des revendications 10 à 16, **caractérisé en ce qu'**on effectue ledit traitement sous une pression supérieure à la pression atmosphérique, de préférence sous une pression comprise entre 1,2.10⁵ Pa et 10.10⁵ Pa.

18. Procédé suivant l'une des revendications 10 à 17, **caractérisé en ce qu'**on effectue ledit traitement à une température supérieure à 5°C, avantageusement entre 10 et 100°C, notamment entre 20 et 95°C, de préférence entre 30 et 60°C.

19. Procédé suivant l'une quelconque des revendications 15 à 18, **caractérisé en ce qu'**il comprend, avant ladite addition, une décomposition de l'additif dans la suspension de particules de carbonate de calcium.

20. Procédé de fabrication de papier ou de carton à partir d'une suspension de fibres cellulosiques, préparée à partir d'une suspension de particules de carbonate de calcium précipité suivant l'une quelconque des revendications 1 à 9, comprenant une application de cette suspension de fibres cellulosiques sur un support poreux, et éventuellement une récupération des eaux d'égouttage provenant du support poreux.

21. Procédé suivant la revendication 20, **caractérisé en ce qu'**on utilise au moins partiellement les eaux d'égouttage pour la préparation d'une suspension de particules de carbonate de calcium suivant l'une quelconque des revendications 1 à 9, cette suspension de particules de carbonate de calcium étant alors réutilisée pour la préparation d'une suspension de fibres cellulosiques.

## Patentansprüche

1. Wässrige Suspension aus Calciumcarbonatpartikeln mit einem pH-Wert von unter 9, wobei die Suspension ein Mittel zum Erhalt eines positiven Zeta-Potentials der Calciumcarbonatpartikel enthält, **dadurch gekennzeichnet, dass** diese eine Suspension aus ausgefällten Calciumcarbonatpartikeln ist, deren pH-Wert auf dem genannten Wert von weniger als 9 gehalten wird, und dadurch, dass das Mittel, das den Erhalt eines positiven Zeta-Potentials ermöglicht, ein Material ist, das die Ca²⁺-Ionen in Lösung bringt.

2. Suspension nach Anspruch 1, **dadurch gekennzeichnet, dass** das Mittel, das den Erhalt eines positiven Zeta-Potentials ermöglicht, eine gelöste Monocarbonsäure der Formel A-COOH ist, wobei A ausgewählt ist aus Wasserstoff und Alkylresten mit 1 bis 8 Kohlenstoffatomen, bevorzugt 1 bis 3 Kohlenstoffatomen, oder aus einem Gemisch aus solchen Säuren, die durch Reaktion mit Ca(OH)₂-Resten in der Suspension Ca²⁺-Ionen in Lösung bringt.

3. Suspension nach Anspruch 1, **dadurch gekennzeichnet, dass** das Mittel, das den Erhalt eines positiven Zeta-Potentials ermöglicht, ein in Wasser lösliches Calciumsalz ist oder ein Gemisch aus solchen Salzen, das in der wässrigen Suspension Ca²⁺-Ionen in Lösung bringt.

4. Suspension nach einem der Ansprüche 1 bis 3, **dadurch gekennzeichnet, dass** die Calciumcarbonatpartikel ein positives Zeta-Potential von mehr als 10 mV, bevorzugt zwischen 10 und 20 mV und besonders bevorzugt von ungefähr 15 mV aufweisen.

5. Suspension nach einem der Ansprüche 1 bis 4, **dadurch gekennzeichnet, dass** diese einen von 7 bis 9 stabilisierten pH-Wert, bevorzugt von 7,5 bis 8,5 aufweist.

6. Suspension nach Anspruch 2, **dadurch gekennzeichnet, dass** diese einen Gehalt eines Calciumsalzes einer Monocarbonsäure oder eines Gemisches von Monocarbonsäuren aufweist, der zwischen 100 mg/l und 20 g/l liegt.

7. Suspension nach Anspruch 6, **dadurch gekennzeichnet, dass** diese einen Gehalt eines Calciumsalzes einer Monocarbonsäure oder eines Gemisches von Monocarbonsäuren aufweist, der zwischen 200 mg/l und 4 g/l liegt.

8. Suspension nach einem der Ansprüche 1 bis 7, **dadurch gekennzeichnet**, das die Calciumcarbonatpartikel einen Mn-Gehalt, ausgedrückt in MnO, von 50 ppm bis 500 ppm, bevorzugt von 70 ppm bis 250 ppm, und besonders bevorzugt von 100 ppm bis 200 ppm aufweist, einen Fe-Gehalt, ausgedrückt in Fe₂O₃, von unter 2000 ppm, bevorzugt von unter 1000 ppm, aufweist, einen Weißheitsindex, gemessen bei 457 nm, von größer oder gleich 95, aber unter 99 aufweist, und einen Gelbheitsindex von kleiner oder gleich 1,5, aber größer als 0,5 aufweist.

9. Suspension nach einem der Ansprüche 1 bis 8, **dadurch gekennzeichnet, dass** die Partikel der Suspension ein Gewichtsmittel des Durchmessers von weniger als 5 *µ*m aufweisen.

10. Verfahren zur Herstellung einer Suspension nach einem der Ansprüche 1 bis 9, umfassend
- eine Bildung einer Suspension von Calciumcarbonatpartikeln in einem wässrigen Medium, und
- eine Zugabe zu der Suspension eines Mittels, das den Erhalt eines positiven Zeta-Potentials der Calciumcarbonatpartikel ermöglicht, wobei der pH-Wert der Suspension unter 9 liegt,
wobei der Verfahren **dadurch gekennzeichnet ist, dass** der Schritt der Bildung einer Suspension umfasst: eine Behandlung eines wässrigen Mediums mit basischem pH-Wert, das Ca(OH)₂ enthält, durch Einleiten von gasförmigem CO₂, um eine Suspension aus ausgefällten Calciumcarbonatpartikeln zu bilden, und dadurch, dass das Mittel, das den Erhalt eines positiven Zeta-Potentials ermöglicht, Ca²⁺-Ionen in einer Menge in Lösung bringt, die ausreicht, um den pH-Wert der Suspension aus ausgefällten Calciumcarbonatpartikeln auf dem pH-Wert von unter 9 zu stabilisieren.

11. Verfahren nach Anspruch 10, **dadurch gekennzeichnet, dass** die gebildete Suspension aus ausgefällten Calciumcarbonatpartikeln weiterhin Ca(OH)₂-Reste enthält, und dadurch, dass das Mittel, das den Erhalt eines positiven Zeta-Potentials ermöglicht, eine gelöste Monocarbonsäure der Formel A-COOH ist, wobei A ausgewählt ist aus Wasserstoff und Alkylresten mit 1 bis 8 Kohlenstoffatomen, bevorzugt 1 bis 3 Kohlenstoffatomen, oder aus einem Gemisch aus solchen Säuren, das durch Reaktion mit den Ca(OH)₂-Resten Ca²⁺-Ionen in Lösung bringt.

12. Verfahren nach Anspruch 10, **dadurch gekennzeichnet, dass** die Suspension aus ausgefällten Calciumcarbonatpartikeln keine Ca(OH)₂-Reste enthält und dadurch, dass das das Mittel, das den Erhalt eines positiven Zeta-Potentials ermöglicht, ein in Wasser lösliches Calciumsalz oder ein Gemisch aus solchen Salzen ist.

13. Verfahren nach einem der Ansprüche 10 bis 12, **dadurch gekennzeichnet, dass** ein Zeta-Potential der Calciumcarbonatpartikel erhalten wird mit einem Wert von 10 bis 20 mV, bevorzugt von ungefähr 15 mV.

14. Verfahren nach einem der Ansprüche 11 und 13, **dadurch gekennzeichnet, dass** eine wässrige Lösung der Monocarbonsäure der Formel A-COOH oder eines Gemisches von solchen Salzen verwendet wird, wobei die wässrige Lösung eine Molkonzentration an Monocarbonsäure von weniger als einem Mol pro Liter, bevorzugt von 0,05 bis 0,3 Mol pro Liter aufweist.

15. Verfahren nach einem der Ansprüche 10 bis 14, **dadurch gekennzeichnet, dass** die Behandlung des wässrigen Mediums in Gegenwart eines Zusatzes durchgeführt wird, ausgewählt aus Hydrazin, Hydroxylamin, löslichen Hydroxylaminsalzen, löslichen Dithionitsalzen und Mischungen davon.

16. Verfahren nach Anspruch 15, **dadurch gekennzeichnet, dass** während der Behandlung des wässrigen Mediums in Gegenwart des Zusatzes das wässrige Medium eine Menge des Zusatzes, der 0,035 bis 5 Gew.-% Ca(OH)₂ entspricht, enthält.

17. Verfahren nach einem der Ansprüche 10 bis 16, **dadurch gekennzeichnet, dass** die Behandlung unter einem höheren Druck als Atmosphärendruck durchgeführt wird, bevorzugt unter einem Druck von 1,2·10⁵ Pa bis 10·10⁵ Pa.

18. Verfahren nach einem der Ansprüche 10 bis 17, **dadurch gekennzeichnet, dass** die Behandlung bei einer Temperatur von über 5°C, insbesondere von 10 bis 100°C, bevorzugt von 20 bis 95°C und besonders bevorzugt von 30 bis 60°C durchgeführt wird.

19. Verfahren nach einem der Ansprüche 15 bis 18, **dadurch gekennzeichnet, dass** es vor der Zugabe eine Zersetzung des Zusatzes in der Suspension aus Calciumcarbonatpartikeln umfasst.

20. Verfahren zur Herstellung von Papier oder Karton, ausgehend von einer Suspension aus Cellulosefasern, hergestellt aus einer Suspension aus ausgefällten Calciumcarbonatpartikeln nach einem der Ansprüche 1 bis 9, umfassend Auftragen der Suspension aus Cellulosefasern auf einen porösen Träger, und gegebenenfalls Rückgewinnung des Tropfwassers aus dem porösen Träger.

21. Verfahren nach Anspruch 20, **dadurch gekennzeichnet, dass** das Tropfwasser zumindest teilweise verwendet wird zur Herstellung einer Suspension aus Calciumcarbonatpartikeln nach einem der Ansprüche 1 bis 9, wobei die Suspension aus Calciumcarbonatpartikeln danach wieder verwendet wird zur Herstellung einer Suspension aus Cellulosefasern.

## Claims

1. Aqueous suspension of calcium carbonate particles exhibiting a pH with a value of less than 9, this suspension exhibiting a content of an agent which makes it possible to obtain a positive zeta potential for the calcium carbonate particles, **characterized in that** it is a suspension of precipitated calcium carbonate particles, the pH of which is stabilized at the said value of less than 9, and **in that** the agent which makes it possible to obtain a positive zeta potential is a material which causes Ca⁺⁺ ions to pass into solution.

2. Suspension according to Claim 1, **characterized in that** the agent which makes it possible to obtain a positive zeta potential is a dilute monocarboxylic acid of formula A-COOH, where A is chosen from the group consisting of hydrogen and alkyl radicals having a number of carbon atoms ranging from 1 to 8, advantageously from 1 to 3, or a mixture of such acids which, by reaction with residual Ca(OH)₂ in the suspension, causes Ca⁺⁺ ions to pass into solution.

3. Suspension according to Claim 1, **characterized in that** the agent which makes it possible to obtain a positive zeta potential is a water-soluble calcium salt or a mixture of such salts which, in the aqueous suspension, causes Ca⁺⁺ ions to pass into solution.

4. Suspension according to one of Claims 1 to 3, **characterized in that** the said calcium carbonate particles exhibit a positive zeta potential of greater than 10 mV, in particular of between 10 and 20 mV, advantageously of approximately 15 mV.

5. Suspension according to one of Claims 1 to 4, **characterized in that** it exhibits a pH stabilized between 7 and 9, preferably between 7.5 and 8.5.

6. Suspension according to Claim 2, **characterized in that** it exhibits a content of the said calcium salt of a monocarboxylic acid or of a mixture of monocarboxylic acids which is between 100 mg/l and 20 g/l.

7. Suspension according to Claim 6, **characterized in that** it exhibits a content of the said calcium salt of a monocarboxylic acid or of a mixture of monocarboxylic acids of between 200 mg/l and 4 g/l.

8. Suspension according to one of Claims 1 to 7, **characterized in that** the calcium carbonate particles exhibit a content of Mn, expressed as MnO, of between 50 ppm and 500 ppm, advantageously between 70 and 250 ppm and preferably between 100 and 200 ppm, a content of Fe, expressed as Fe₂O₃, of less than 2 000 ppm, advantageously of less than 1 000 ppm, a whiteness index, measured at 457 nm, of greater than or equal to 95 but less than 99, and a yellowness index of less than or equal to 1.5 but greater than 0.5.

9. Suspension according to any one of Claims 1 to 8, **characterized in that** the particles of the latter exhibit a weight-average diameter of less than 5 µm.

10. Process for the preparation of a suspension according to one of Claims 1 to 9, comprising
- formation of a suspension of calcium carbonate particles in an aqueous medium, and
- addition to the suspension of an agent which makes it possible to obtain a positive zeta potential for the calcium carbonate particles, the pH of the suspension having a value of less than 9,
this process being **characterized in that** the stage of formation of a suspension comprises a treatment of an aqueous medium of basic pH comprisiing Ca(OH)₂ by injection of gaseous CO₂ in order to form a suspension of precipitated calcium carbonate and **in that** the agent which makes it possible to obtain a positive zeta potential causes Ca⁺⁺ ions to pass into solution in an amount sufficient to stabilize the pH of the suspension of precipitated calcium carbonate at the said pH value of less than 9.

11. Process according to Claim 10, **characterized in that** the suspension of precipitated calcium carbonate formed also comprises residual Ca(OH)₂ and **in that** the agent which makes it possible to obtain a positive zeta potential is a dilute monocarboxylic acid of formula A-COOH, where A is chosen from the group consisting of hydrogen and alkyl radicals having a number of carbon atoms ranging from 1 to 8, advantageously from 1 to 3, or a mixture of such acids which, by reaction with the residual Ca(OH)₂, causes Ca⁺⁺ ions to pass into solution.

12. Process according to Claim 10, **characterized in that** the suspension of precipitated calcium carbonate formed does not comprise residual Ca(OH)₂ and **in that** the agent which makes it possible to obtain a positive zeta potential is a water-soluble calcium salt or a mixture of such salts.

13. Process according to one of Claims 10 to 12, **characterized in that** the zeta potential of the calcium carbonate particles is obtained at a value of between 10 and 20 mV, advantageously of approximately 15 mV.

14. Process according to either one of Claims 11 and 13, **characterized in that** use is made of an aqueous solution of the said monocarboxylic acid of formula A-COOH or of a mixture of such acids, the said aqueous solution exhibiting a molar concentration of monocarboxylic acid of less than one mole per litre, advantageously of between 0.05 and 0.3 mol per litre.

15. Process according to any one of Claims 10 to 14, **characterized in that** the said treatment of the aqueous medium is carried out in the presence of an additive chosen from the group consisting of hydrazine, hydroxylamine, soluble hydroxylamine salts, soluble dithionite salts, and their mixtures.

16. Process according to Claim 15, **characterized in that**, during the said treatment of the aqueous medium in the presence of the said additive, the said aqueous medium comprises an amount of the said additive corresponding to 0.035 to 5% by weight of Ca(OH)₂.

17. Process according to one of Claims 10 to 16, **characterized in that** the said treatment is carried out under a pressure greater than atmospheric pressure, preferably under a pressure of between 1.2 × 10⁵ Pa and 10 × 10⁵ Pa.

18. Process according to one of Claims 10 to 17, **characterized in that** the said treatment is carried out at a temperature of greater than 5°C, advantageously between 10 and 100°C, in particular between 20 and 95°C, preferably between 30 and 60°C.

19. Process according to any one of Claims 15 to 18, **characterized in that** it comprises, before the said addition, a decomposition of the additive in the suspension of calcium carbonate particles.

20. Process for the manufacture of paper or board from a suspension of cellulose fibres, prepared from a suspension of precipitated calcium carbonate particles according to any one of Claims 1 to 9, comprising an application of this suspension of cellulose fibres to a porous support and optionally a recovery of the aqueous drainage liquors originating from the porous support.

21. Process according to Claim 20, **characterized in that** the aqueous drainage liquors are at least partly used for the preparation of a suspension of calcium carbonate particles according to any one of Claims 1 to 9, this suspension of calcium carbonate particles then being reused for the preparation of a suspension of cellulose fibres.
